# EUROPEAN PATENT SPECIFICATION

(11) **EP 3 233 555 B1**
(45) Date of publication and mention of the grant of the patent: **12.08.2020**
(21) Application number: 15877324.2
(22) Date of filing: 15.12.2015
(51) Int. Cl.: B60K 15/035, F01N 3/20, B60K 15/03, F16K 24/04

(54) **FUEL LIMIT VENT VALVE HAVING VAPOR PERMEABLE MEMBRANE**
KRAFTSTOFFBEGRENZUNGSENTLÜFTUNGSVENTIL MIT DAMPFDURCHLÄSSIGER MEMBRAN
CLAPET DE MISE À L'AIR LIBRE ET DE LIMITATION DE REMPLISSAGE DOTÉ D'UNE MEMBRANE PERMÉABLE À LA VAPEUR

(30) Priority: 18.12.2014 WO PCT/US2014/071118; 18.12.2014 IN 3764DE2014
(43) Date of publication of application: 25.10.2017
(73) Proprietor: Eaton Corporation, Cleveland, OH 44122 (US)
(72) Inventor: MEMMER, Matthew, Plymouth, Michigan 48170 (US); MOY, Curtis T., Oxford, Michigan 48371 (US); MILLS, Vaughn K., Chelsea, Michigan 48118 (US); PAI, Sreenivas, Moshi Pune 412105 (IN); MOHITE, Sanjay, Bhosari Pune 411026 (IN)
(74) Representative: Schwan Schorer & Partner mbB
(86) International application number: PCT/US2015/065682
(87) International publication number: WO 2016/111810

(56) References cited:
- EP-A1- 0 724 098
- EP-A1- 2 492 128
- WO-A1-2013/169354
- WO-A1-2013/169354
- WO-A2-2015/095500
- CA-A1- 2 824 340
- US-A1- 2006 070 656
- US-A1- 2010 236 640
- US-A1- 2012 186 677
- US-A1- 2012 186 677

## Description

### FIELD

The present disclosure relates generally to tanks for storing liquid reductant and more particularly to a fill limit vent valve configured on the tank and that incorporates a vapor permeable membrane.

### BACKGROUND

Selective catalytic reduction (SCR) systems are sometimes employed with compression-ignition engines to reduce nitrogen oxides in the exhaust stream. SCR systems require the use of a reductant, such as anhydrous ammonia, aqueous ammonia, or urea in the exhaust stream. In some systems, diesel fuel is chemically reformulated to create ammonia. In this regard, when the reductant is not derived from the main fuel of the engine, a separate tank is employed to store the reductant prior to injection of the reductant into the exhaust system.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In US 2012/186677 A1 there is disclosed a fill limit vent valve configured for use with a reductant tank, the fill limit vent valve comprising
a valve body that defines an inner chamber and has a valve outlet;
a float having a float body configured to be received within the inner chamber and configured to sealingly engage the valve body;
a vapor permeable membrane disposed in the vent valve, the vapor permeable membrane configured to permit vapor to pass through while inhibiting liquid from passing through; and
the float movable between
(i) an open position wherein vapor flows along a first flow path through the valve inner chamber and out of the valve body; and
(ii) a closed position wherein the float sealingly engages the valve body and precludes vapor from flowing along the first flow path, wherein vapor is permitted to flow along a second flow path through the vapor permeable membrane and out of the valve body.

### SUMMARY

The present invention is a fill limit vent valve configured for used with a reductant tank as it is defined in claim 1.

Additional features of the fill limit vent valve suggested herein are defined in the dependent claims.

### BRIEF DESCRIPTION OF THE DRAWINGS

The present disclosure will become more fully understood from the detailed description and the accompanying drawings, wherein:
FIG. 1 is a schematic illustration of a reductant tank that incorporates a fill limit vent valve which does not fall within the scope of the claims;
FIG. 2 is an exploded view of the fill limit vent valve of FIG. 1, the fill limit vent valve incorporating a valve body, a vapor permeable membrane, a clip and a float;
FIG. 3 is a sectional view of the fill limit vent valve of FIG. 2 and shown with the float in a normally open position allowing venting around the float and out through a valve outlet connector body in a first vent path;
FIG. 4 is a sectional view of the fill limit vent valve of FIG. 3 and shown with the float moved upward to a closed position where vapor is vented through the vapor permeable membrane in a second vent path, the vapor permeable membrane inhibiting liquid to pass therethrough;
FIG. 5A is a partial perspective view of the valve body, membrane and clip of the fill limit vent valve of Fig. 2 shown with the clip in an unassembled position;
FIG. 5B is a partial perspective view of the valve body, membrane and clip of FIG. 5A and shown in an assembled position;
FIG. 6A is a sectional view of a fill limit vent valve constructed in accordance to the present disclosure and shown with the float in a normally open position allowing venting around the float and out through a valve outlet connector body in a first vent path; and
FIG. 6B is a sectional view of the fill limit vent valve of FIG. 6A and shown with the float in a closed position where vapor is vented through the vapor permeable membrane in a second vent path, the vapor permeable membrane inhibiting liquid to pass therethrough;

### DETAILED DESCRIPTION

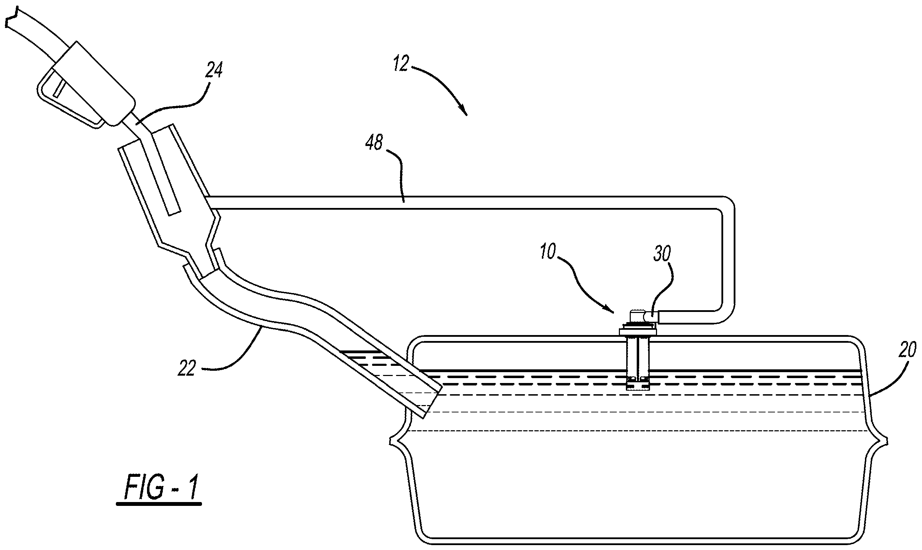

With initial reference now to FIG. 1, a fill limit vent valve is shown and generally identified at reference 10. The fill limit vent valve 10 is shown as part of a selective catalytic reduction (SCR) system 12 that generally includes a liquid reductant tank 20 having a filler neck 22. The filler neck 22 is shown in FIG. 1 with a filler nozzle 24 received therein.

The fill limit vent valve 10 is disposed through a top wall of the vehicle liquid reductant tank 20. The fill limit vent valve 10 includes an outlet 30 connected through a vapor recirculation line 48. The vapor recirculation line 48 can be fluidly connected at a first end to the upper end of the filler neck 22 and connected at an opposite end to the outlet 30. The vapor recirculation line 48 can provide vapor recirculation of a portion of the vapor flowing from the outlet 30. The recirculation can be facilitated by the aspiration effect of the flow of the liquid reductant in the filler neck 22 during refilling.

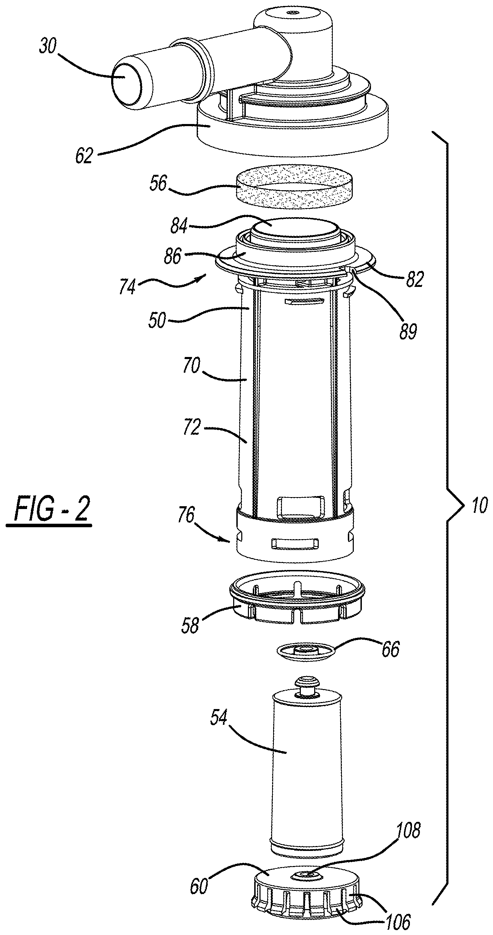

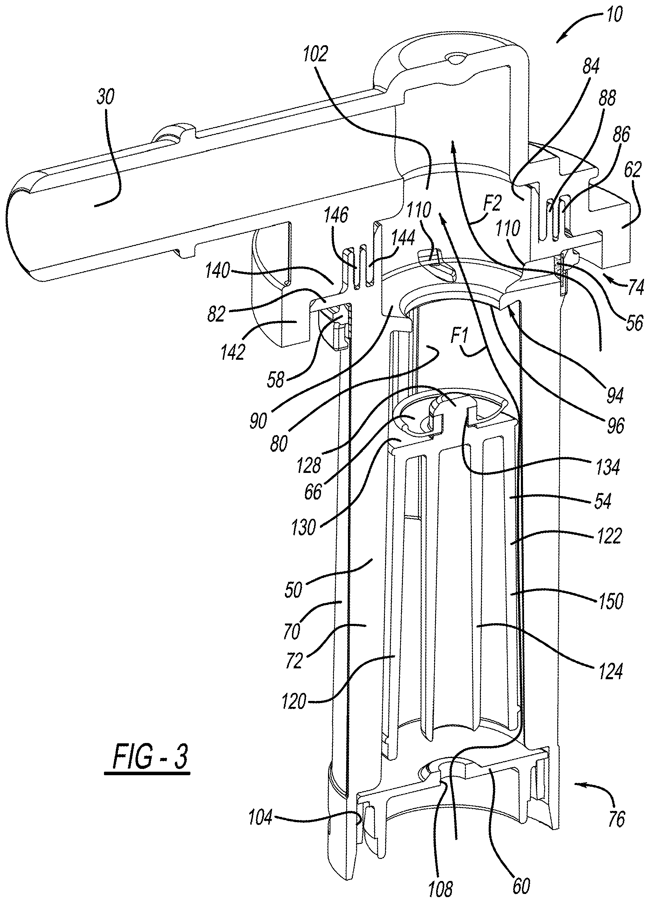

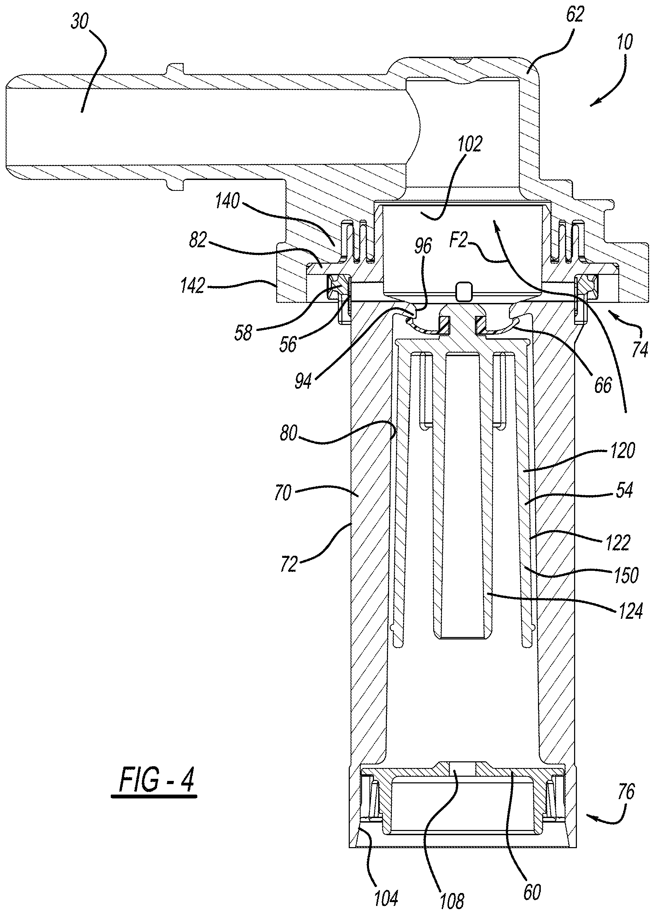

With continued reference to FIG. 1 and additional reference now to FIG. 2, the fill limit vent valve 10 will be described in greater detail. The fill limit vent valve 10 generally includes a valve body 50, a float 54, a vapor permeable membrane 56, a clip 58, a plug 60 and a valve outlet connector body 62. A float seal 66 can be disposed on the float 54. The float 54 is configured to move within the valve body 50 between a normally open position (FIG. 3) and a closed position (FIG. 4). As will become appreciated from the following discussion, the vapor permeable membrane 56 can be configured to allow vapor to pass therethrough while precluding liquid from passing therethrough. The vapor permeable membrane 56 can be a single annular member or may be comprised of a split membrane having two or more sections.

The valve body 50 will now be described in greater detail. The valve body 50 generally comprises an elongated body 70 having an outer circumferential wall 72 that extends between an upper tank mounting end 74 and an opposite end 76. The outer circumferential wall 72 defines a valve inner chamber 80 that receives the float 54. The upper tank mounting end 74 can further include a rim 82, an inner annular flange 84, an outer annular flange 86 and an intermediate annular flange 88. The rim 82 can define a locating notch 89 thereon. An annular lip 90 can extend into the valve inner chamber 80 and define an upper travel limit for the float 54. The annular lip 90 can have a valve body seat 94 and define a central opening 96. The inner annular flange 84 can define a valve body outlet 102 that is fluidly connected to the outlet 30 of the fill limit vent valve 10.

The opposite (lower) end 76 of the valve body 50 can define a recessed bore 104 that is configured to receive the plug 60. The plug 60 can have legs 106 configured to engage complementary structure on the valve body 50. The plug 60 can define a plug passage 108.

Valve openings 110 are defined through the valve body 50 generally at the upper tank mounting end 74. In the particular example shown, the valve openings 110 are formed through the annular lip 90 and the inner annular flange 84. In one configuration four valve openings 110 are provided on the valve body 50, however, more or less valve openings 110 may be included. As will be described more fully herein, the valve openings 110 are configured to align for cooperation with the vapor permeable membrane 56 to allow vapor to pass therethrough. In the example shown, the vapor permeable membrane 56 is mounted around the outer circumferential wall 72 of the valve body 50 near the upper tank mounting end generally against the valve openings 110.

A series of protruding ridges 112 extend outwardly from the valve body 50 near the upper tank mounting end 74. Each of the protruding ridges 112 can include a ramped surface 116 and a retaining ledge 118. As will be described herein, the protruding ridges 112 can locate the clip 58 at a location between the protruding ridges 112 and the rim 82. The clip 58 therefore can nest annularly around the upper tank mounting end 74 outboard of the membrane 56. In this regard, the clip 58 can surround and protect the vapor permeable membrane 56.

The float 54 will now be described in greater detail. The float 54 can be formed of rigid plastic material and be configured to respond or float in a direction up and down as viewed in FIGS. 3 and 4 based on contact with liquid reductant. The float 54 can generally include a float body 120 that includes an outer circumferential portion 122 and an inner circumferential portion 124. A knob 128 extends from an upper end 130 of the float body 120. The knob 128 defines a neck 134 that captures the float seal 66 thereon.

With reference now to FIGS. 2 and 3, the valve outlet connector body 62 will be described in greater detail. The valve outlet connector body 62 can generally include a lower connecting flange 140 and an annular skirt 142. The valve outlet connector body 62 can additionally include an inner locating ring 144 and an outer locating ring 146.

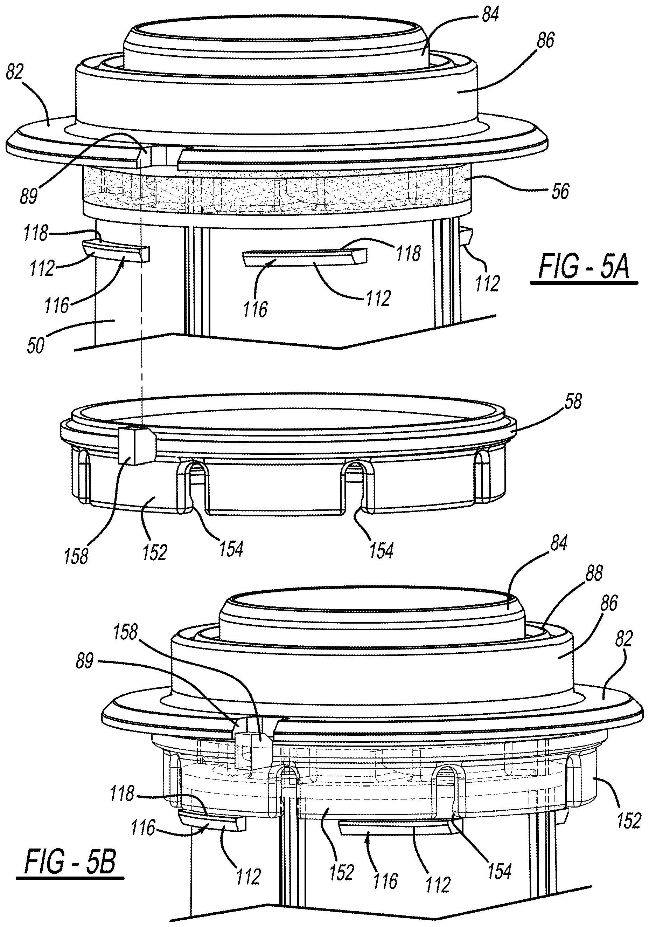

With particular reference to FIGS. 5A and 5B, the clip 58 will be described in greater detail. As identified above, the clip 58 is configured to locate between the protruding ridges 112 of the valve body 50 and the rim 82 (FIG. 5B). The clip 58 includes a series of fingers 152 extending therefrom. The fingers 152 include gripping distal end portions 154. A locating tab 158 extends from the clip 58 and is configured to locate at the notch 89 of the rim 82 (FIG. 5B). The locating tab 158 and the notch 89 cooperate to inhibit rotation of the clip 58. The gripping distal end portions 154 can be configured to ride over the respective ramped surfaces 116 of the protruding ridges 112 (progressively deforming outwardly) until clearing the ridges 112 at which point the fingers 152 can plastically snap into place into an assembled position. The respective ledges 118 of the ridges 112 can bound and/or engage the distal end portions 154 to maintain the clip in the assembled position (FIG. 5B).

Operation of the fill limit vent valve 10 will now be described. With initial reference to FIG. 3, the fill limit vent valve 10 is shown in a normally open position. In the normally open position, reductant vapor is permitted to flow along a first flow path F1 from inside the liquid reductant tank 20, through the plug passage 108, around the float 54, through the central opening 96 and out the valve body outlet 102. In the normally open position, vapor is also permitted to flow along a second flow path F2 through the vapor permeable membrane 56, through the valve openings 110 and out the valve body outlet 102.

With reference now to FIG. 4, the fill limit vent valve 10 is shown in a closed position. In the closed position, the float 54 is moved upward within the valve inner chamber 80. The float 54 can be caused to move up when liquid reductant has been added to the liquid reductant tank 20 and the liquid reductant tank 20 reaches a "full" level. In the closed position, the float seal 66 attains a sealing position with the valve body seat 94. The float seal 66 and the valve body seat 94 therefore block flow of liquid reductant and vapor through the central opening 96. Vapor however is still permitted to escape the reductant tank 20 along the flow path F2. Specifically, vapor is allowed to flow through the vapor permeable membrane 56, through the valve openings 110 and out the valve body outlet 102. In a roll-over condition or when the reductant tank is inverted, the float 54 will remain in the closed position and liquid reductant will be inhibited from escaping through the valve body outlet 102.

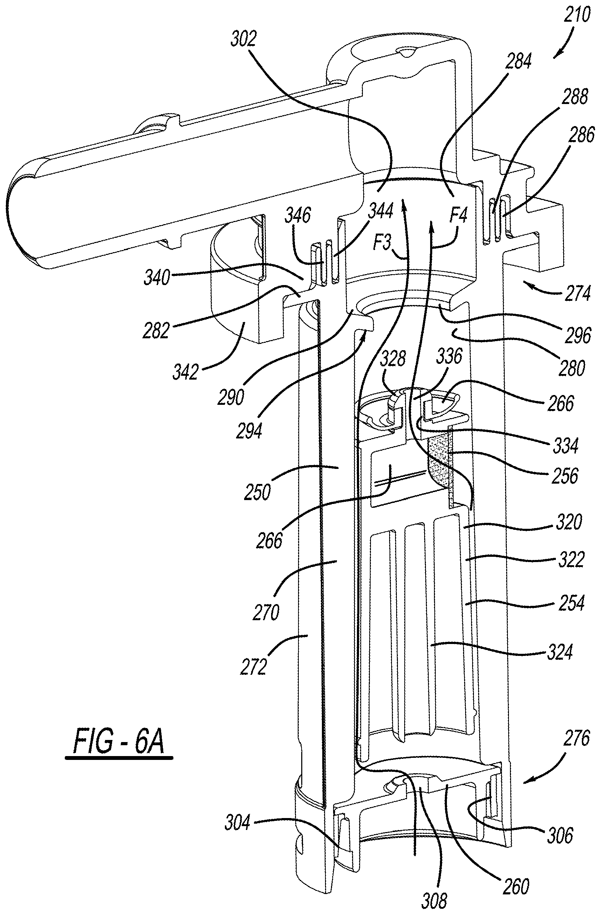

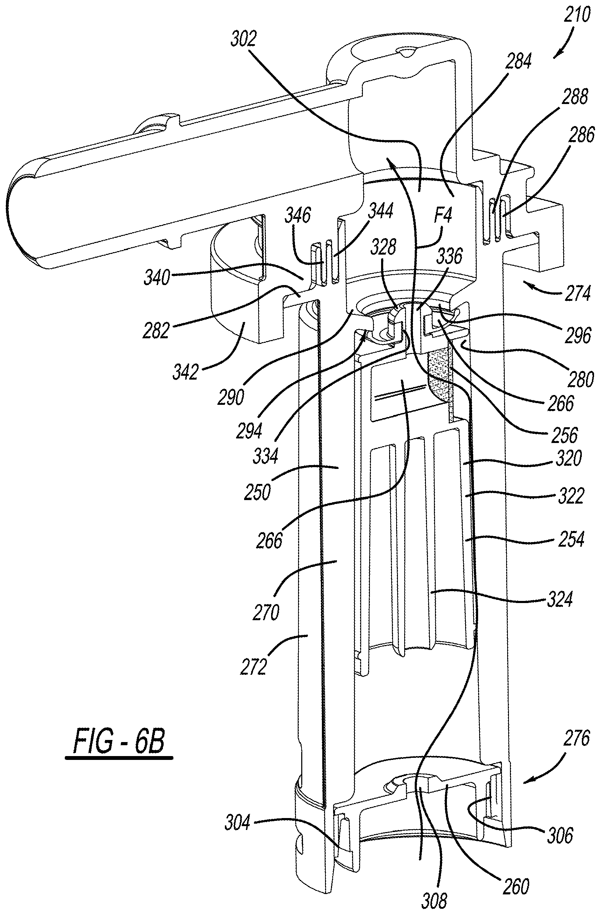

Turning now to FIGS. 6A and 6B, a fill limit vent valve 210 constructed in accordance to an example of the present disclosure will be described. The fill limit vent valve 210 may be used in the selective catalyst reduction system 12 described above with respect to FIG. 1. The fill limit vent valve 210 generally includes a valve body 250, a float 254, a vapor permeable membrane 256, a plug 260 and a valve outlet connector body 262. A float seal 266 can be disposed on the float 254. The float 254 can be configured to move within the valve body 50 between a normally open position (FIG. 6A) and a closed position (FIG. 6B). The vapor permeable membrane 256 can be configured to allow vapor to pass therethrough while precluding liquid reductant from passing therethrough. The vapor permeable membrane 256 is incorporated on the float 254 and provides an outer boundary of a float chamber 266 provided on the float 254.

The valve body 250 will now be described in greater detail. The valve body 250 generally comprises an elongated body 270 having an outer circumferential wall 272 that extends between an upper tank mounting end 274 and an opposite end 276. The outer circumferential wall 272 defines a valve inner chamber 280 that receives the float 254. The upper tank mounting end 274 can further include a rim 282, an inner annular flange 284, an outer annular flange 286 and an intermediate annular flange 288. An annular lip 290 can extend into the valve inner chamber 280 and define an upper travel limit for the float 254. The annular lip 290 can have a valve body seat 294 and define a central opening 296. The inner annular flange 284 can define a valve body outlet 302 that can be fluidly connected to the outlet 30 (FIG. 1) of the fill limit vent valve 10.

The opposite (lower) end 276 of the valve body 250 can define a recessed bore 304 that is configured to receive the plug 260. The plug 260 can have legs 306 configured to engage complementary structure on the valve body 250. The plug 260 can define a plug passage 308.

The float 254 will now be described in greater detail. The float 254 can be formed of rigid plastic material and be configured to respond or float in a direction up and down as viewed in FIGS. 6A and 6B based on contact with liquid reductant. The float 254 can generally include a float body 320 that includes an outer circumferential portion 322, and an inner circumferential portion 324. A knob 328 extends from an upper end 330 of the float body 320. The knob 328 defines a neck 334 that captures the float seal 266 thereon. The knob 328 further defines a float passage 336.

The valve outlet connector body 262 can be constructed similar to the valve outlet body 62 described above. In this regard, the valve outlet connector body 262 can generally include a lower connecting flange 340 and an annular skirt 342. The valve outlet connector body 262 can additionally include an inner locating ring 344 and an outer locating ring 346.

Operation of the fill limit vent valve 210 according to one example of the present disclosure will now be described. With initial reference to FIG. 6A, the fill limit vent valve 210 is shown in a normally open position. In the normally open position, vapor is permitted to flow along a first flow path F3 from inside the liquid reductant tank 20, through the plug passage 308, around the float 254, through the central opening 296 and out the valve body outlet 302. In the normally open position, vapor is also permitted to flow along a second flow path F4 through the vapor permeable membrane 256, through the float passage 336, through the central opening 296 and out the valve body outlet 302.

With reference now to FIG. 6B, the fill limit vent valve 210 is shown in a closed position. In the closed position, the float 254 is moved upward within the valve inner chamber 280. The float 254 can be caused to move up when liquid reductant has been added to the liquid reductant tank 20 and the liquid reductant tank 20 reaches a "full" level. In the closed position, the float seal 266 attains a sealing position with the valve body seat 294. The float seal 266 and the valve body seat 294 therefore block flow path F3 (FIG. 6A) of liquid reductant and vapor through the central opening 96. Vapor however is still permitted to escape the reductant tank 20 along the flow path F4. Specifically, vapor is allowed to flow through the vapor permeable membrane 256, through the float passage 336, through the central opening 296 and out the valve body outlet 302. In a roll-over condition or when the reductant tank 20 is inverted, the float 254 will remain in the closed position and liquid reductant will be inhibited from escaping through the valve body outlet 102.

## Claims

1. A fill limit vent valve (210) configured for use with a reductant tank, the fill limit vent valve comprising:
a valve body (250) that defines an inner chamber (280) and has a valve outlet (302); and
a float (254) having a float body (320) configured to be received within the inner chamber and configured to sealingly engage the valve body (250);
**characterized by**:
a vapor permeable membrane (256) disposed on the float body (320) and providing an outer boundary of a float chamber (266) provided on the float (254), the vapor permeable membrane configured to permit vapor to pass through while inhibiting liquid from passing through;
the float (254) further including a knob (328) that defines a float passage (336); and
the float movable between
(i) an open position wherein vapor flows along a first flow path (F3) through the valve inner chamber (280) around the float (254) and out of the valve body (250) and further along a second flow path (F4) through the vapor permeable membrane (256), through the float chamber (266), through the float passage (336), and out the valve body; and
(ii) a closed position wherein the float (254) sealingly engages the valve body (250) and precludes vapor from flowing along the first flow path, wherein vapor still is permitted to flow along the second flow path (F4) through the vapor permeable membrane (256), through the float chamber (266), through the float passage (336), and out of the valve body.

2. The fill limit vent valve (210) of claim 1 wherein the valve body (250) has a circumferential wall (272) that extends between an upper tank mounting end (274) and an opposite end (276), the valve body defining a valve body seat (294), and at least one valve opening (296).

3. The fill limit vent valve (210) of claim 2 wherein the vapor permeable membrane (256) is disposed adjacent to the at least one valve opening (296).

4. The fill limit vent valve (210) of claim 3 wherein the float (254) further comprises a float seal (266) configured to sealingly engage the valve body seat (294).

5. The fill limit vent valve (210) of claim 1 wherein the knob (328) defines a neck (334) that captures the float seal (266) thereon.

6. The fill limit vent valve of claim 1, further comprising a valve outlet connector body {262) having a lower connecting flange (340) and an annular skirt (342).

7. The fill limit vent valve of claim 1 wherein the valve body (250) includes an annular lip (290) that defines an upper travel limit for the float (254).

8. The fill limit vent valve of claim 1 wherein the valve body (250) defines a recessed bore (304) that is configured to receive a plug (260 ).

9. The fill limit vent valve of clam 8 wherein the plug (260) defines a plug passage (308).

## Patentansprüche

1. Füllungsbegrenzungsentlüftungsventil (210), das zur Verwendung mit einem Reduktionsmitteltank ausgelegt ist, wobei das Füllungsbegrenzungsentlüftungsventil Folgendes umfasst:
einen Ventilkörper (250), der eine Innenkammer (280) definiert und einen Ventilauslass (302) aufweist; und
einen Schwimmer (254), der einen Schwimmerkörper (320) aufweist, der dazu ausgelegt ist, innerhalb der inneren Kammer aufgenommen zu werden und dazu ausgelegt ist, dichtend in den Ventilkörper (250) einzugreifen;
**gekennzeichnet durch**:
eine dampfdurchlässige Membran (256), die auf dem Schwimmerkörper (320) angeordnet ist und eine Außenbegrenzung einer auf dem Schwimmer (254) vorgesehenen Schwimmerkammer (266) vorsieht, wobei die dampfdurchlässige Membran dazu ausgelegt ist, zuzulassen, dass Dampf dort hindurch verläuft, während verhindert wird, dass Flüssigkeiten dadurch verlaufen;
die Tatsache, dass der Schwimmer (254) ferner eine Kuppe (328) umfasst, die einen Schwimmerdurchgang (336) definiert; und
die Tatsache, dass der Schwimmer zwischen folgenden Stellungen beweglich ist:
(i) einer offenen Stellung, in der Dampf entlang eines ersten Strömungswegs (F3) durch die Ventilinnenkammer (280) um den Schwimmer (254) herum und aus dem Ventilkörper (250) heraus und ferner entlang eines zweiten Strömungswegs (F4) durch die dampfdurchlässige Membran (256), durch die Schwimmerkammer (266), durch den Schwimmerdurchgang (336) und aus dem Ventilkörper heraus strömt; und
(ii) einer geschlossenen Stellung, in der der Schwimmer (254) dichtend in den Ventilkörper (250) eingreift und verhindert, dass Dampf entlang des ersten Strömungswegs strömt, wobei trotzdem zugelassen wird, dass Dampf entlang des zweiten Strömungswegs (F4) durch die dampfdurchlässige Membran (256), durch die Schwimmerkammer (266), durch den Schwimmerdurchgang (336) und aus dem Ventilkörper heraus strömt.

2. Füllungsbegrenzungsentlüftungsventil (210) nach Anspruch 1, wobei der Ventilkörper (250) eine umlaufende Wand (272) aufweist, die sich zwischen einem oberen Tankmontageende (274) und einem entgegengesetzten Ende (276) erstreckt, wobei der Ventilkörper einen Ventilkörpersitz (294) und mindestens eine Ventilöffnung (296) definiert.

3. Füllungsbegrenzungsentlüftungsventil (210) nach Anspruch 2, wobei die dampfdurchlässige Membran (256) an die mindestens eine Ventilöffnung (296) angrenzend angeordnet ist.

4. Füllungsbegrenzungsentlüftungsventil (210) nach Anspruch 3, wobei der Schwimmer (254) ferner eine Schwimmerdichtung (266) umfasst, die dazu ausgelegt ist, dichtend in den Ventilkörpersitz (294) einzugreifen.

5. Füllungsbegrenzungsentlüftungsventil (210) nach Anspruch 1, wobei die Kuppe (328) einen Hals (334) definiert, der die Schwimmerdichtung (266) darauf fixiert.

6. Füllungsbegrenzungsentlüftungsventil nach Anspruch 1, ferner einen Ventilauslassanschlusskörper (262) umfassend, der einen unteren Verbindungsflansch (340) und einen ringförmigen Mantel (342) aufweist.

7. Füllungsbegrenzungsentlüftungsventil nach Anspruch 1, wobei der Ventilkörper (250) eine ringförmige Lippe (290) umfasst, die eine obere Bewegungsbegrenzung für den Schwimmer (254) definiert.

8. Füllungsbegrenzungsentlüftungsventil nach Anspruch 1, wobei der Ventilkörper (250) eine Senkbohrung (304) definiert, die dazu ausgelegt ist, einen Stopfen (260) aufzunehmen.

9. Füllungsbegrenzungsentlüftungsventil nach Anspruch 8, wobei der Stopfen (260) einen Stopfendurchgang (308) definiert.

## Revendications

1. Clapet de mise à l'air libre à limitation de remplissage (210) configuré pour être utilisé avec un réservoir de réducteur, le clapet de mise à l'air libre à limitation de remplissage comprenant :
un corps de clapet (250) qui définit une chambre interne (280) et a une sortie de clapet (302) ; et
un flotteur (254) ayant un corps de flotteur (320) configuré pour être reçu dans la chambre interne et configuré pour mettre en prise, de manière étanche, le corps de clapet (250) ;
**caractérisé par** :
une membrane perméable à la vapeur (256) disposée sur le corps de flotteur (320) et fournissant une limite externe d'une chambre de flotteur (266) prévue sur le flotteur (254), la membrane perméable à la vapeur étant configurée pour permettre à la vapeur de passer à travers cette dernière tout en empêchant le liquide de passer à travers celle-ci ;
le flotteur (254) comprenant en outre un bouton (328) qui définit un passage de flotteur (336) ; et
le flotteur étant mobile entre :
(i) une position ouverte dans laquelle la vapeur s'écoule le long d'une première trajectoire d'écoulement (F3) en passant par la chambre interne de clapet (280) autour du flotteur (254) et sortant par le corps de clapet (250) et en outre le long d'une seconde trajectoire d'écoulement (F4) en passant par la membrane perméable à la vapeur (256), par la chambre de flotteur (266), par le passage de flotteur (336), et sortant par le corps de clapet ; et
(ii) une position fermée dans laquelle le flotteur (254) met en prise, de manière étanche, le corps de clapet (250) et empêche la vapeur de s'écouler le long de la première trajectoire d'écoulement, dans laquelle la vapeur est toujours autorisée à s'écouler le long de la seconde trajectoire d'écoulement (F4) en passant par la membrane perméable à la vapeur (256), par la chambre de flotteur (266), par le passage de flotteur (336), et sortant par le corps de clapet.

2. Clapet de mise à l'air libre à limitation de remplissage (210) selon la revendication 1, dans lequel le corps de clapet (250) a une paroi circonférentielle (272) qui s'étend entre une extrémité de montage de réservoir supérieure (274) et une extrémité (276) opposée, le corps de clapet définissant un siège de corps de clapet (294), et au moins une ouverture de clapet (296).

3. Clapet de mise à l'air libre à limitation de remplissage (210) selon la revendication 2, dans lequel la membrane perméable à la vapeur (256) est disposée de manière adjacente à la au moins une ouverture de clapet (296).

4. Clapet de mise à l'air libre à limitation de remplissage (210) selon la revendication 3, dans lequel le flotteur (254) comprend en outre un joint d'étanchéité de flotteur (266) configuré pour mettre en prise de manière étanche le siège de corps de clapet (294).

5. Clapet de mise à l'air libre à limitation de remplissage (210) selon la revendication 1, dans lequel le bouton (328) définit un col (334) qui capture le joint d'étanchéité de flotteur (266) sur ce dernier.

6. Clapet de mise à l'air libre à limitation de remplissage selon la revendication 1, comprenant en outre un corps de connecteur de sortie de clapet (262) ayant une bride de raccordement inférieure (340) et une jupe annulaire (342).

7. Clapet de mise à l'air libre à limitation de remplissage selon la revendication 1, dans lequel le corps de clapet (250) comprend une lèvre annulaire (290) qui définit une fin de course supérieure pour le flotteur (254).

8. Clapet de mise à l'air libre à limitation de remplissage selon la revendication 1, dans lequel le corps de clapet (250) définit un alésage évidé (304) qui est configuré pour recevoir un bouchon (260).

9. Clapet de mise à l'air libre à limitation de remplissage selon la revendication 8, dans lequel le bouchon (260) définit un passage de bouchon (308).
